# FASCICULE DE BREVET EUROPEEN

(11) **EP 3 393 776 B1**
(45) Date de publication et mention de la délivrance du brevet: **13.11.2019**
(21) Numéro de dépôt: 16813096.1
(22) Date de dépôt: 30.11.2016
(51) Int. Cl.: B29C 33/00, B29D 30/06, B29C 43/38

(54) **MOULE DE VULCANISATION AVEC UNE ETANCHEITE RENFORCEE**
VULKANISIERFORM MIT VERBESSERTER ABDICHTUNG
VULCANIZING MOULD WITH ENHANCED SEALING

(30) Priorité: 22.12.2015 FR 1563145
(43) Date de publication de la demande: 31.10.2018
(73) Titulaire: Compagnie Générale des Etablissements Michelin, 63000 Clermont-Ferrand (FR)
(72) Inventeur: BLANCHET, Etienne, 63040 Clermont-Ferrand Cedex 9 (FR); LESCUR, Thomas, 63040 Clermont-Ferrand Cedex 9 (FR)
(74) Mandataire: Roussy, Delphine
(86) Numéro de dépôt international: PCT/FR2016/053152
(87) Numéro de publication internationale: WO 2017/109315

(56) Documents cités:
- EP-A1- 0 983 833
- FR-A1- 2 678 862
- FR-A5- 2 087 540
- JP-A- 2009 202 441
- US-A- 3 609 819

## Description

L'invention concerne le domaine des moules pour pneumatiques, en particulier les moules de type à secteurs.

Un moule à secteurs comporte généralement deux coquilles latérales pour le moulage des flancs du pneumatique, et plusieurs secteurs périphériques situés entre les coquilles pour le moulage de la bande de roulement du pneumatique. Le moulage de la bande se fait plus précisément par des garnitures comprenant les motifs du pneumatique. Ces garnitures de moulage sont rapportées et fixées à la face intérieure de chaque secteur ou bien venues de matière.

Pendant la vulcanisation, l'ébauche crue du futur pneumatique étant fermement appliquée et maintenue contre le moule, elle est soumise à certaines conditions de pression et de température faisant que le mélange de caoutchouc cru devient fluide. Ainsi, une très bonne étanchéité du moule est nécessaire pour éviter l'apparition de bavures sur le pneumatique en cours de cuisson.

Cependant, dans la pratique, la fermeture d'un moule de vulcanisation sur plusieurs faces en même temps et avec un jeu entre différentes pièces inférieur à 0.03 mm est difficilement atteignable sur les moules à secteurs connus de l'état de la technique.

Une solution à ce problème est proposée par le brevet EP0522374. Ce brevet propose un moule à secteurs comprenant en outre des segments de jonc latéraux fixés sur les secteurs. En position de fermeture du moule, les secteurs sont en contact les uns avec les autres via lesdits segments qui assurent également le contact entre les secteurs et les coquilles. Ainsi, en exerçant une compression élastique sur les segments de jonc par leur appui les uns sur les autres, le jeu entre pièces peut être réduit, ce qui réduit donc le risque d'apparition de bavures sur le pneumatique.

Néanmoins, les segments de jonc doivent être fabriqués séparément, ajustés puis fixés sur chaque secteur, ce qui complexifie la fabrication du moule. De plus, cette solution nécessite un nombre important de pièces supplémentaires comprenant les segments de jonc et les pièces de fixation, ce qui rend donc la fabrication du moule coûteuse.

Il est connu du document FR 2 678 862 des moules selon le préambule de la revendication 1 qui propose de rendre la couronne de secteurs compressibles en circonférence.

Le document JP 2009202 441 propose l'utilisation d'un joint compressible. Les documents EP 983 833 et US 3 609 819 proposent l'utilisation d'une plaque de métal qui peut se déformer élastiquement et le document FR 2 087 540 propose des garnitures de moulage avec des géométries prévues pour que les garnitures s'emboîtent.

L'objectif de l'invention est de proposer un moule de vulcanisation à secteurs qui permette de résoudre le problème d'étanchéité tout en restant simple à fabriquer et peu couteux.

À cet effet, l'invention a pour objet un moule pour pneumatique comprenant deux coquilles destinées chacune à assurer un moulage d'un flanc latéral du pneumatique, une couronne de secteurs destinés à assurer un moulage d'une bande de roulement du pneumatique, chaque secteur de la couronne de secteurs comprenant une face radialement intérieure comportant une garniture de moulage, le moule se caractérise par le fait qu'il comporte des microstructures agencées de sorte à combler un jeu subsistant entre deux garnitures de moulage de secteurs adjacents et/ou entre une garniture de moulage d'un secteur et une coquille, lorsque le moule est fermé.

Le moule de vulcanisation selon l'invention comporte ainsi des microstructures agencées dans les zones où du jeu subsiste entre les garnitures de secteurs adjacents et/ou entre les garnitures des secteurs et chaque coquille. Lors de la fermeture du moule, les microstructures d'un composant du moule, par exemple les microstructures formées sur une garniture d'un secteur, se déforment sous l'effet des contraintes exercées par les microstructures d'un autre composant du moule, adjacent, par une garniture ou par une coquille. En se déformant, lesdites microstructures comblent le jeu subsistant au niveau de leur emplacement dans le moule. De cette manière, on supprime donc les problèmes d'étanchéité des moules de vulcanisation et on évite en conséquence la formation de bavures de moulage sur les pneus.

En outre cette solution est simple et peu couteuse, car elle ne nécessite ni la fabrication séparée d'éléments supplémentaires, ni ajustement, ni fixation de ces éléments supplémentaires. Les microstructures peuvent être fabriquées en même temps que les garnitures, ce qui permet encore un gain de temps et donc une réduction des coûts de fabrication.

Avantageusement, la déformation des microstructures est une déformation plastique.

Selon un premier mode de réalisation, les microstructures sont agencées dans une zone de contact entre deux garnitures de secteurs adjacents et sont solidaires d'au moins l'une desdites garnitures de secteurs. Ceci permet de combler le jeu subsistant entre garnitures de secteurs adjacents.

Selon un deuxième mode de réalisation, les microstructures sont agencées dans une zone de contact entre une garniture de secteur et une coquille et sont solidaires de la garniture de secteur et/ou de la coquille. La zone de contact entre garnitures de secteurs et coquille est aussi appelée zone d'emboîtage. La présence de microstructures dans cette zone d'emboîtage sur chacun des garnitures de secteurs, sur la coquille ou à la fois sur les garnitures de secteurs et la coquille permet de combler tout jeu subsistant dans cette zone d'emboîtage.

Avantageusement, les microstructures sont réalisées par frittage laser. La technique de frittage laser permet de réaliser les microstructures en même temps que la réalisation des garnitures, ce qui permet donc un gain de temps.

Avantageusement, lesdites microstructures sont réalisées sur un pourtour de la garniture de moulage.

Avantageusement, les microstructures sont rapportées et fixées au moule par des moyens de fixations. L'avantage d'avoir des microstructures rapportées est de pouvoir remplacer ces microstructures sans remplacer les garnitures. Ce qui permet donc de faire des économies.

Avantageusement, les microstructures sont fixées par microsoudure.

Alternativement, les microstructures sont obtenues par la technique appelée Dépôt Laser de Métal (LMD, pour Laser Metal Déposition).

Avantageusement, les microstructures sont agencées de manière à s'adapter au profil du jeu entre deux garnitures de secteurs adjacents et/ou entre une garniture de secteur et une coquille. Ceci permet donc de s'assurer de bien combler le jeu subsistant entre garnitures de secteurs adjacents et/ou entre garnitures de secteurs et coquille.

Selon un premier exemple de réalisation, les microstructures sont, de part leur forme, agencées de sorte à être comprimées sous l'effet d'une contrainte. La forme desdites microstructures est, par exemple, selon l'une parmi des pics, des pyramides, des carrés et des dômes.

Selon un deuxième exemple de réalisation, les microstructures sont, de part leur forme, agencées de sorte à fléchir sous l'effet d'une contrainte. La forme de ces microstructures est, par exemple, selon l'une parmi des lames arcboutées, des lames coudées et des lames inclinées.

L'invention sera mieux comprise à la lecture de la description suivante de modes de réalisation préférés donnés à titre d'exemples illustratifs, non limitatifs, en référence aux dessins parmi lesquels :
- La figure la représente une coupe partielle d'un moule de vulcanisation connu de l'état de la technique ;
- Les figures 1b et 1c illustrent les types de jeu subsistant à la fermeture du moule représenté en figure la ;
- Les figures 2a à 2d illustrent un moule selon un premier exemple de réalisation de l'invention, comprenant des microstructures entre secteurs et coquille ;
- Les figures 3a et 3b illustrent un moule selon un deuxième exemple de réalisation de l'invention, comprenant des microstructures entre secteurs adjacents ;
- Les figures 4a à 4d illustrent des variantes du moule illustré aux figures 3a et 3b ;
- Les figures 5a à 5c illustrent les emplacements possibles des microstructures sur une garniture de secteur selon l'invention ;
- Les figures 6a à 6d illustrent des exemples de microstructures déformables par compression ;
- Les figures 7a à 7d, 8a, 8b et 9a, 9b illustrent des exemples de microstructures en forme de lames déformables par fléchissent.

La figure la montre une vue partielle d'une coupe dans un plan méridien d'un moule 1 à secteurs pour pneumatique, connu de l'état de la technique. Le moule 1 comporte un ensemble de secteurs 2 formant une couronne de secteurs et deux coquilles 3, l'une inférieure et l'autre supérieure. Chaque secteur 2 de la couronne de secteurs, comprend une face radialement intérieure 2' comportant une garniture de moulage 2". Le moule 1 comporte également une ceinture 4 qui sert à maintenir ensemble les secteurs 2 lorsque le moule 1 est fermé.

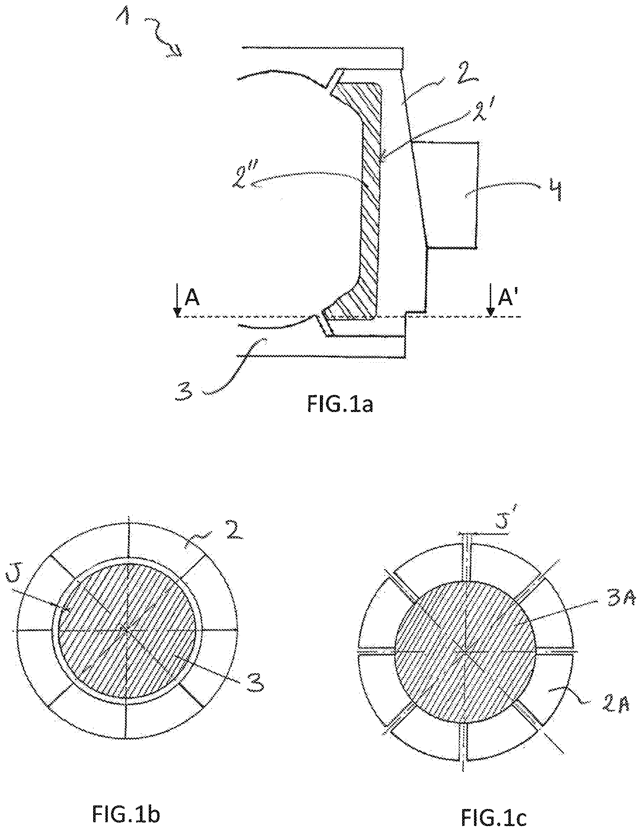

La figure 1b est une coupe, suivant l'axe AA' montré en figure la, qui illustre une première configuration de fermeture du moule 1 dans laquelle la fermeture se fait d'abord par contact entre secteurs 2 adjacents et dans lequel subsiste un jeu J entre la couronne de secteurs 2 et la coquille 3, plus précisément au niveau de cercle d'emboîtage.

La figure 1c est également une coupe suivant l'axe AA' montré en figure la qui illustre une deuxième configuration de fermeture du moule 1 dans laquelle la fermeture se fait d'abord par un contact de type secteur 2A/coquille 3A et dans lequel il subsiste un jeu J'entre secteurs 2A adjacents.

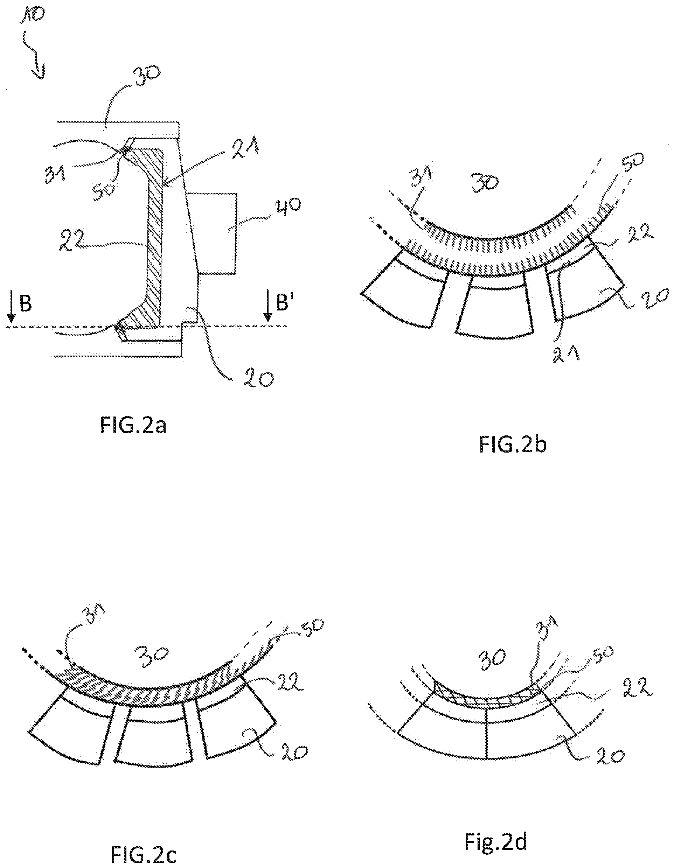

La figure 2a montre une vue partielle d'une coupe dans un plan méridien d'un moule 10 à secteurs pour pneumatique, conforme à un premier exemple de réalisation de l'invention. Le moule 10 comporte un ensemble de secteurs 20 formant une couronne de secteurs et deux coquilles 30, l'une inférieure et l'autre supérieure. Chaque secteur 20 de la couronne de secteurs, comprend une face radialement intérieure 21 comportant une garniture de moulage 22. Le moule 1 comporte également une ceinture 40 qui sert à maintenir ensemble les secteurs 20 lorsque le moule 10 est fermé.

Chaque secteur 20 comprend en outre des microstructures 50 agencées sur les garnitures 22 au niveau d'une zone de contact avec la coquille 30. La coquille 30 comprend également des microstructures 31 agencées sur ladite coquille au niveau d'une zone de contact avec les secteurs 20.

Les figures 2b à 2d sont des vues partielles de coupes selon l'axe BB' montrée en figure 2a.

Le moule 10 tel que montré par la figure 2b est ouvert. La figure 2c montre le moule 10 en cours de fermeture. Dans ce cas les secteurs 20 ont été rapprochés, mais ne se touchent pas encore complètement. Les microstructures 50 et 31 ont commencé à se frotter les unes contre les autres.

Dans la figure 2d, le moule 10 est complètement fermé, les secteurs 20 sont en contact les uns contre les autres comme dans le cas illustré par la figure 1b. Les microstructures 31, 50 sont déformées et ont comblé le jeu J10 entre les secteurs 20 et la coquille 30.

Dans une variante non montrée, le moule 10 comporte uniquement les microstructures 31 agencées sur la coquille 30.

Dans une autre variante, également non montrée, le moule 10 comporte uniquement les microstructures 50 agencées sur la garniture 22 de chaque secteur 20.

Selon encore une autre variante, la garniture 22 du secteur 20 est composée de plusieurs parties.

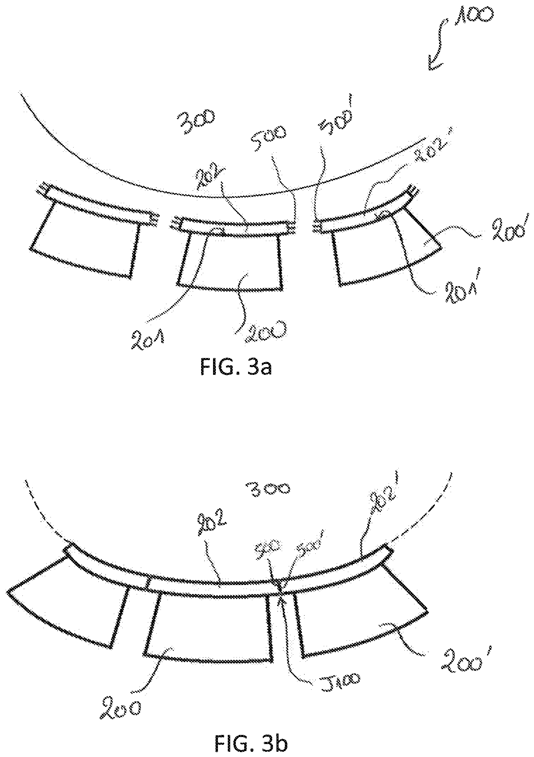

Les figures 3a et 3b sont des vues partielles de coupes similaires à la coupe montrée en figure 1c, d'un moule 100 selon un deuxième exemple de réalisation de l'invention. Le moule 100 est sensiblement identique au moule 10 décrit précédemment en référence aux figures 2a à 2c et comprend un ensemble de secteurs 200, 200' formant une couronne de secteurs 200, 200' et deux coquilles 300. Chaque secteur 200, 200' comprend une garniture 202, 202' agencée dans la face radialement intérieure 201, 201' du secteur 200, 200'.

Cependant, dans ce cas chaque secteur 200 comprend en outre des microstructures 500 agencées sur la face latérale de la garniture 202 au niveau d'une zone de contact avec une garniture 202' d'un secteur 200' adjacent du secteur 200. Le secteur 202' comporte également des microstructures 500' agencées sur la face latérale de la garniture 202' au niveau d'une zone de contact avec la garniture 202 du secteur 200.

Dans la figure 3a, le moule 100 est ouvert et les secteurs 200, 200' sont séparés l'un de l'autre.

La fermeture du moule dans cette configuration se fait comme dans l'exemple montré par la figure 1c, c'est-à-dire, d'abord par contact entre coquille 300 et secteurs 200, 200', ensuite chaque secteur 200, 200' rentre en contact avec ses voisins via les garnitures 202, 202'. Dans ce cas, les microstructures 500 du secteur 200 se frottent aux microstructures 500' du secteur voisin 200'.

La figure 3b, correspond à une situation dans laquelle le moule 100 est complètement fermé, les garnitures 202, 202' des secteurs 200, 200' respectivement, sont en contact l'une contre l'autre et les microstructures 500, 500' sont déformées et ont comblé le jeu J100 entre les secteurs 200 et 200'.

Dans une variante, non montrée, chaque secteur comporte des microstructures sur une seule face latérale de la garniture de sorte que lors de la fermeture il y a un contact entre la garniture d'un secteur et les microstructures d'un secteur voisin, lesdites microstructures comblant le jeu subsistant entre les deux secteurs.

Dans une autre variante, également non montrée, un secteur parmi deux comporte des microstructures.

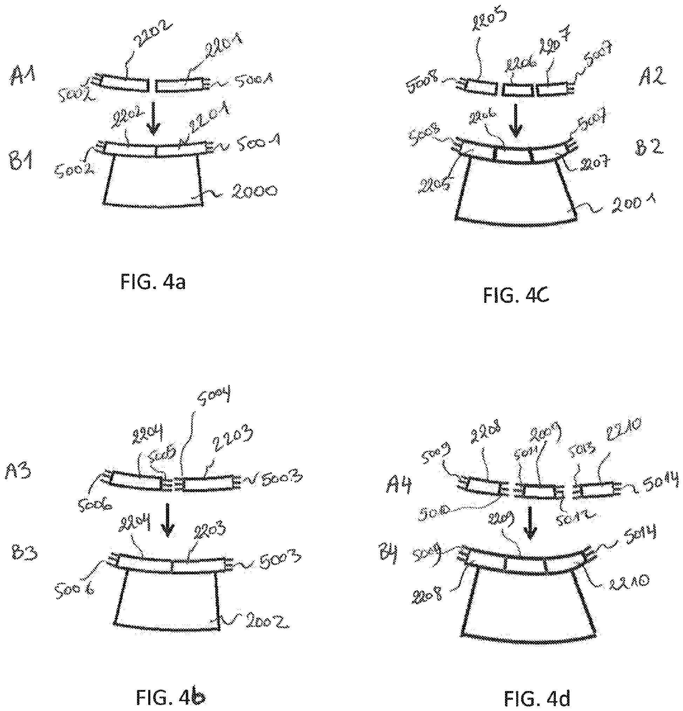

Dans l'exemple illustré par les figures 3a et 3b, chaque secteur 200, 200' comporte une garniture 202, 202' simple, c'est à dire formée en un seul élément. Les figures 4a à 4d montrent dès variantes de réalisation dans lesquelles le secteur 2000; 2001; 2002; 2003 comporte un assemblage de garnitures. Dans chacune des figures 4a à 4d l'état A1, A2, A3 ou A4 correspond à l'état des éléments des garnitures avant la pose sur le secteur 2000; 2001; 2002; 2003 et l'état B1, B2, B3 ou B4 correspond à l'état des garnitures après la pose sur le secteur 2000; 2001; 2002; 2003.

Dans le cas des figures 4a et 4b l'assemblage de garnitures est formé de deux éléments de garniture 2201, 2202, 2203 et 2204. Dans le cas des figures 4c et 4d l'assemblage de garnitures est formé de trois éléments de garniture 2205, 2206, 2207, 2208, 2209, 2210.

Dans les variantes illustrées aux figures 4a et 4c, seules les faces latérales extérieures de l'assemblage comportent des microstructures 5001, 5002; 5007, 5008, ces microstructures 5001, 5002; 5007, 5008 sont destinées à combler le jeu avec une autre garniture d'un secteur adjacent.

Les variantes illustrées aux figures 4b et 4d, diffèrent des variantes illustrées aux figures 4a et 4c respectivement, par le fait que chaque garniture 2201, 2203; 2208, 2209, 2210 comporte des microstructures 5003, 5004, 5005, 5006; 5009, 5010, 5011, 5012, 5013, 5014 sur ses deux faces latérales. De cette manière, en plus de combler le jeu subsistant entre garnitures de secteurs adjacents, le jeu subsistant entre les éléments de garniture 2203, 2204; 2208, 2209, 2210 du même secteur 2002; 2003 est également comblé par les microstructures 5004, 5005; 5010, 5011, 5012, 5013.

Selon une variante, le nombre de garnitures par secteur est supérieur à trois.

Selon une autre variante de réalisation les microstructures sont agencées à la fois entre garnitures de secteurs comme décrit en référence au figures 3a et 3b ou 4a à 4d et entre garnitures de secteurs et coquille, telle que décrit en référence au figures 2a à 2c.

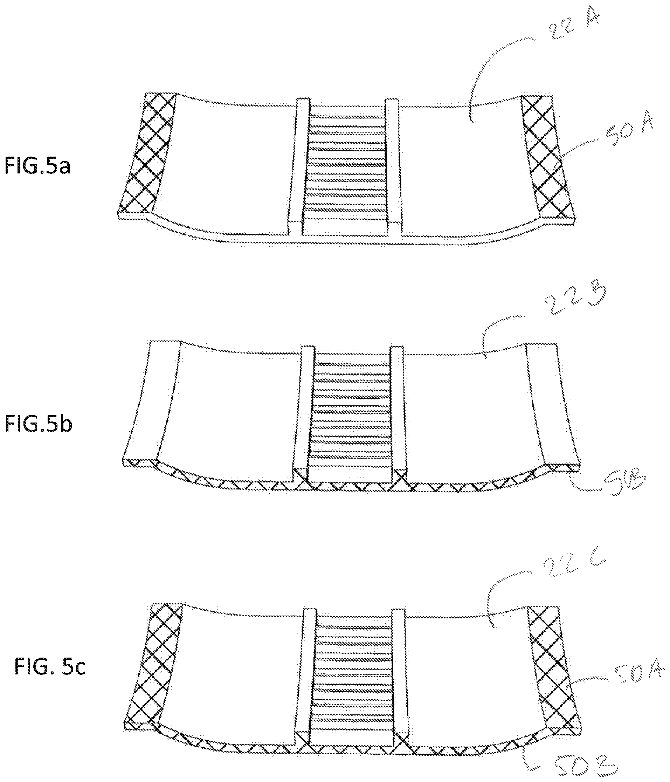

Les figures 5a à 5c représentent un exemple de garniture d'un secteur de moule pour pneumatique selon l'invention. Sur la figure 5a, la garniture 22A comporte des microstructures 50A dans la zone de contact avec une coquille, non représentée sur les figures 5a à 5c. Sur la figure 5b, la garniture 22B comporte des microstructures 50B une zone de contact avec la garniture d'un autre secteur. Sur la figure 5c, la garniture 22C comporte des microstructures 50A dans la zone de contact avec une coquille et des 50B une zone de contact avec la garniture d'un autre secteur.

Selon une variante, les secteurs ne comportent pas de garniture(s) et les microstructures sont agencées entre secteurs adjacents et/ou entre secteurs et coquille. Dans ce cas, la partie moulante d'un secteur est, par exemple, taillée directement dans le secteur, par usinage. La partie moulante peut également être fabriquée sur un secteur existant par fusion sélective par laser (SLM, pour Selective Laser Melting) et des microstructures sont alors ajoutées directement sur secteurs et/ou coquilles.

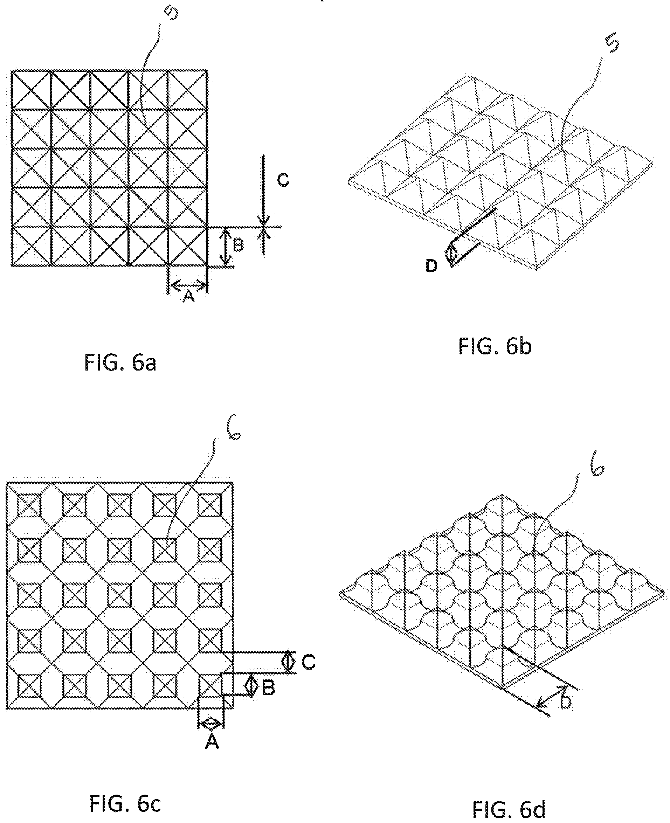

Les figures 6a et 6b représentent respectivement une vue de dessus et une vue de côté d'un ensemble de microstructures 5 selon un premier exemple de réalisation. Dans cet exemple, les microstructures 5 sont de forme pyramidale où chaque pyramide est caractérisée par une longueur A, une largeur B, une hauteur D. Les pyramides sont espacées d'une distance C.

Les figures 6c et 6d représentent respectivement une vue de dessus et une vue isométrique d'un ensemble de microstructures 6 selon un deuxième exemple de réalisation. Dans cet exemple, les microstructures 6 sont d'une forme correspondant sensiblement à un empilement d'une pyramide supérieure sur une pyramide inférieure de dimension supérieure. Lesdites pyramides supérieure et inférieure ayant des faces courbées. Chaque microstructure est caractérisée par une longueur A, une largeur B et une hauteur D. L'ensemble des microstructures 6 est également caractérisé par un espacement C entre microstructures 6.

Les microstructures 5, 6 décrites ci-dessus en référence aux figures 6a à 6d se déforment plastiquement par compression sous l'effet d'une contrainte.

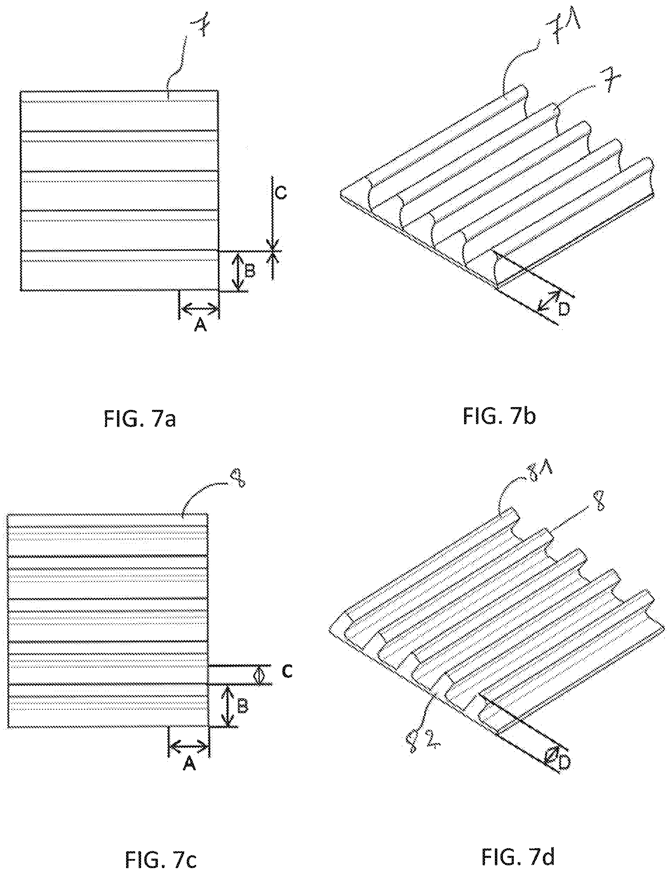

Les figures 7a et 7b représentent respectivement une vue de dessus et une vue isométrique d'un ensemble de microstructures 7 selon un autre exemple de réalisation. Dans cet exemple, les microstructures 7 ont une forme de lames inclinées avec une partie supérieure 71 de forme arrondie. Chaque microstructure 7 est caractérisée par une longueur A, une largeur B de la base 72 de la lame et une hauteur D. Chaque lame est espacée d'une lame adjacente d'une distance C.

Les figures 7c et 7d représentent respectivement une vue de dessus et une vue isométrique d'un ensemble de microstructures 8 selon une variante des lames inclinées illustrées par les figures 7a et 7b. La différence réside dans le fait que dans ce cas, les lames ont une base 82 plus fine et une partie supérieure 81 rectangulaire et non arrondie.

De la même manière que pour les microstructures 7, chaque microstructure 8 est caractérisée par une longueur A, une largeur B et une hauteur D. Chaque lame est espacée d'une lame adjacente d'une distance C.

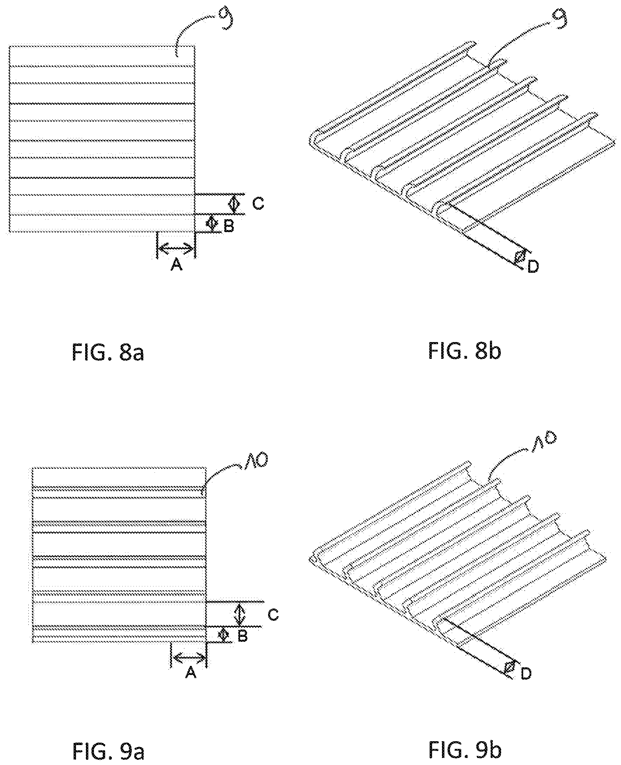

Les figures 8a et 8b représentent respectivement une vue de dessus et une vue isométrique d'un ensemble de microstructures 9 en forme de lames arcboutées. Dans ce cas aussi, chaque lame 9 est caractérisée par une longueur A, une largeur B et une hauteur D. Chaque lame 9 est espacée d'une lame adjacente d'une distance C.

Les figures 9a et 9b représentent respectivement une vue de dessus et une vue isométrique d'un ensemble de microstructures 10 en forme de lames coudées. Dans ce cas également, chaque lame 10 est caractérisée par une longueur A, une largeur B et une hauteur D. Chaque lame 10 est espacée d'une lame adjacente d'une distance C.

Les microstructures en forme de lames 7, 8, 9, 10 décrites ci-dessus en référence aux figures 7a à 7d, 8a et 8b, 9a et 9b se déforment plastiquement par fléchissement sous l'effet d'une contrainte.

## Revendications

1. Moule (10 ; 100) pour pneumatique comprenant deux coquilles (30 ; 300) destinées chacune à assurer un moulage d'un flanc latéral du pneumatique, une couronne de secteurs (20 ; 200, 200') destinés à assurer un moulage d'une bande de roulement du pneumatique, chaque secteur (20 ; 200, 200') de la couronne de secteurs comprenant une face radialement intérieure (21 ; 201, 201') comportant une garniture de moulage (22; 22A; 22B; 22C; 202, 202'; 2201, 2202; 2203, 2204; 2205, 2206, 2207; 2208, 2209, 2210), **caractérisé en ce que** le moule comporte des microstructures (5 ; 6 ; 7 ; 8 ; 9 ; 10 ; 31, 50 ; 50A ; 50B; 50C ; 500, 500' ; 5001, 5002 ; 5003, 5004, 5005, 5006 ; 5007, 5008 ; 5009, 5010, 5011, 5012, 5013, 5014) agencées de sorte à combler un jeu subsistant entre deux garnitures de moulage de secteurs (200, 200') adjacents et/ou entre une garniture de moulage d'un secteur (20 ; 200, 200') et une coquille (30 ; 300), lorsque le moule est fermé.

2. Moule (100) pour pneumatique selon la revendication 1, dans lequel les microstructures (5 ; 6 ; 7 ; 8 ; 9 ; 10 ; ; 50B; 50C; 500, 500' ; 5001, 5002 ; 5003, 5004, 5005, 5006 ; 5007, 5008 ; 5009, 5010, 5011, 5012, 5013, 5014) sont agencées dans une zone de contact entre deux garnitures (22B; 22C; 202, 202'; 2201, 2202; 2203, 2204; 2205, 2206, 2207; 2208, 2209, 2210) de secteurs (200, 200') adjacents et sont solidaires d'au moins l'une desdites garnitures (22B; 22C; 202, 202'; 2201, 2202; 2203, 2204; 2205, 2206, 2207; 2208, 2209, 2210) de secteurs (200, 200' ; 2000 ; 2001 ; 2002 ; 2003).

3. Moule (10) pour pneumatique selon l'une quelconque des revendications 1 et 2, dans lequel les microstructures (5 ; 6 ; 7 ; 8 ; 9 ; 10 ; 31, 50 ; 50A ; 50C) sont agencées dans une zone de contact entre une garniture (22 ; 22A ; 22C) de secteur (20) et une coquille (30) et sont solidaires de la garniture de secteur (20) et/ou de la coquille (30).

4. Moule (10 ; 100) pour pneumatique selon l'une quelconque des revendications 1 à 3, **caractérisé en ce que** lesdites microstructures (5 ; 6 ; 7 ; 8 ; 9 ; 10 ; 31, 50 ; 50A ; 50B; 50C ; 500, 500' ; 5001, 5002; 5003, 5004, 5005, 5006 ; 5007, 5008 ; 5009, 5010, 5011, 5012, 5013, 5014) sont réalisées par frittage laser.

5. Moule (10 ; 100) pour pneumatique selon la revendication 4 dans lequel lesdites microstructures (5 ; 6 ; 7 ; 8 ; 9 ; 10 ; 50 ; 50A; 50B; 50C ; 500, 500' ; 5001, 5002 ; 5003, 5004, 5005, 5006 ; 5007, 5008 ; 5009, 5010, 5011, 5012, 5013, 5014) sont réalisées sur un pourtour de la garniture de moulage (22 ; 22A ; 22B ; 22C ; 202, 202'; 2201, 2202; 2203, 2204; 2205, 2206, 2207; 2208, 2209, 2210).

6. Moule (10 ; 100) pour pneumatique selon l'une quelconque des revendications 1 à 3, dans lequel lesdites microstructures (5 ; 6 ; 7 ; 8 ; 9 ; 10 ; 31, 50 ; 50A ; 50B; 50C ; 500, 500' ; 5001, 5002 ; 5003, 5004, 5005, 5006 ; 5007, 5008 ; 5009, 5010, 5011, 5012, 5013, 5014) sont rapportées et fixées au moule par des moyens de fixations.

7. Moule (10 ; 100) pour pneumatique selon la revendication 6, dans lequel lesdites microstructures (5 ; 6 ; 7 ; 8 ; 9 ; 10 ; 31, 50 ; 50A ; 50B; 50C ; 500, 500' ; 5001, 5002 ; 5003, 5004, 5005, 5006 ; 5007, 5008 ; 5009, 5010, 5011, 5012, 5013, 5014) sont fixées par microsoudure.

8. Moule (10 ; 100) pour pneumatique selon l'une quelconque des revendications 1 à 7, dans lequel les microstructures (5 ; 6 ; 7 ; 8 ; 9 ; 10 ; 31, 50 ; 50A ; 50B; 50C ; 500, 500' ; 5001, 5002 ; 5003, 5004, 5005, 5006 ; 5007, 5008 ; 5009, 5010, 5011, 5012, 5013, 5014) sont agencées de manière à s'adapter au profil du jeu entre deux garnitures de secteurs (200, 200'; 2000 ; 2001 ; 2002 ; 2003) adjacents et/ou entre une garniture de secteur (20) et une coquille (30).

9. Moule (10 ; 100) pour pneumatique selon l'une quelconque des revendications 1 à 8, dans lequel les microstructures (5, 6) sont, de part leur forme, agencés de sorte à être comprimées sous l'effet d'une contrainte.

10. Moule (10 ; 100) pour pneumatique selon la revendication 8, dans lequel la forme desdites microstructures est selon l'une parmi des pics, des pyramides (5), des carrés (6) et des dômes.

11. Moule (10 ; 100) pour pneumatique selon l'une quelconque des revendications 1 à 8, dans lequel les microstructures (7 ; 8 ; 9 ; 10) sont, de part leur forme, agencées de sorte à fléchir sous l'effet d'une contrainte.

12. Moule (10 ; 100) pour pneumatique selon la revendication 10, dans lequel la forme desdites microstructures est selon l'une parmi des lames arcboutées (9), des lames coudées (10) et des lames inclinées (7 ; 8).

## Patentansprüche

1. Form (10; 100) für einen Reifen, welche zwei Seitenplatten (30; 300) umfasst, die jeweils dazu bestimmt sind, ein Formen einer Seitenwand des Reifens sicherzustellen, sowie einen Segmentring, dessen Segmente (20; 200, 200') dazu bestimmt s ind, ein Formen eines Laufstreifens des Reifens sicherzustellen, wobei jedes Segment (20; 200, 200') des Segmentrings eine radial innere Fläche (21; 201, 201') umfasst, die einen Formeinsatz (22; 22A; 22B; 22C; 202, 202'; 2201, 2202; 2203, 2204; 2205, 2206, 2207; 2208, 2209, 2210) aufweist, **dadurch gekennzeichnet, dass** die Form Mikrostrukturen (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) aufweist, die derart angeordnet sind, dass sie einen Zwischenraum ausfüllen, welcher zwischen zwei Formeinsätzen benachbarter Segmente (200, 200') und/oder zwischen einem Formeinsatz eines Segments (20; 200, 200') und einer Seitenplatte (30; 300) verbleibt, wenn die Form geschlossen ist.

2. Form (100) für einen Reifen nach Anspruch 1, wobei die Mikrostrukturen (5; 6; 7; 8; 9; 10; 50B; 50C; 500, 500'; 5001, 5002; 5003, 5004, 5005, 5006; 5007, 5008; 5009, 5010, 5011, 5012, 5013, 5014) in einem Kontaktbereich zwischen zwei Einsätzen (22B; 22C; 202, 202'; 2201, 2202; 2203, 2204; 2205, 2206, 2207; 2208, 2209, 2210) benachbarter Segmente (200, 200') angeordnet sind und mit wenigstens einem dieser Einsätze (22B; 22C; 202, 202'; 2201, 2202; 2203, 2204; 2205, 2206, 2207; 2208, 2209, 2210) von Segmenten (200, 200'; 2000; 2001; 2002; 2003) fest verbunden sind.

3. Form (10) für einen Reifen nach einem der Ansprüche 1 und 2, wobei die Mikrostrukturen (5; 6; 7; 8; 9; 10; 31, 50; 50A; 50C) in einem Kontaktbereich zwischen einem Einsatz (22; 22A; 22C) eines Segments (20) und einer Seitenplatte (30) angeordnet sind und mit dem Einsatz des Segments (20) und/oder mit der Seitenplatte (30) fest verbunden sind.

4. Form (10; 100) für einen Reifen nach einem der Ansprüche 1 bis 3, **dadurch gekennzeichnet, dass** die Mikrostrukturen (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) durch Lasersintern hergestellt sind.

5. Form (10; 100) für einen Reifen nach Anspruch 4, wobei die Mikrostrukturen (5; 6; 7; 8; 9; 10; 50; 50A; 50B; 50C; 500, 500'; 5001, 5002; 5003, 5004, 5005, 5006; 5007, 5008; 5009, 5010, 5011, 5012, 5013, 5014) auf einem Umfang des Formeinsatzes (22; 22A; 22B; 22C; 202, 202'; 2201, 2202; 2203, 2204; 2205, 2206, 2207; 2208, 2209, 2210) hergestellt sind.

6. Form (10; 100) für einen Reifen nach einem der Ansprüche 1 bis 3, wobei die Mikrostrukturen (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) durch Befestigungsmittel an die Form angebaut und an ihr befestigt sind.

7. Form (10; 100) für einen Reifen nach Anspruch 6, wobei die Mikrostrukturen (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) durch Mikroschweißen befestigt sind.

8. Form (10; 100) für einen Reifen nach einem der Ansprüche 1 bis 7, wobei die Mikrostrukturen (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) derart angeordnet sind, dass sie sich an das Profil des Zwischenraums zwischen zwei Einsätzen benachbarter Segmente (200, 200'; 2000; 2001; 2002; 2003) und/oder zwischen einem Einsatz eines Segments (20) und einer Seitenplatte (30) anpassen.

9. Form (10; 100) für einen Reifen nach einem der Ansprüche 1 bis 8, wobei die Mikrostrukturen (5, 6) durch ihre Form dafür ausgebildet sind, unter der Einwirkung einer Beanspruchung zusammengedrückt zu werden.

10. Form (10; 100) für einen Reifen nach Anspruch 8, wobei die Form der Mikrostrukturen einer von Spitzen, Pyramiden (5), Quadraten (6) und Kuppeln entspricht.

11. Form (10; 100) für einen Reifen nach einem der Ansprüche 1 bis 8, wobei die Mikrostrukturen (7; 8; 9; 10) durch ihre Form dafür ausgebildet sind, sich unter der Einwirkung einer Beanspruchung zu durchbiegen.

12. Form (10; 100) für einen Reifen nach Anspruch 10, wobei die Form der Mikrostrukturen einer von Lamellen in Form abgestützter Bögen (9), abgewinkelten Lamellen (10) und geneigten Lamellen (7; 8) entspricht.

## Claims

1. Mould (10; 100) for a tyre, comprising two shells (30; 300) that are each intended to mould a lateral sidewall of the tyre, a ring of sectors (20; 200, 200') intended to mould a tread of the tyre, each sector (20; 200, 200') of the ring of sectors comprising a radially inner face (21; 201, 201') having a moulding lining (22; 22A; 22B; 22C; 202, 202'; 2201, 2202; 2203, 2204; 2205, 2206, 2207; 2208, 2209, 2210), **characterized in that** the mould has microstructures (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) that are designed to fill a clearance between two moulding linings of adjacent sectors (200, 200') and/or between a moulding lining of one sector (20; 200, 200') and a shell (30; 300), when the mould is closed.

2. Mould (100) for a tyre according to Claim 1, wherein the microstructures (5; 6; 7; 8; 9; 10; 50B; 50C; 500, 500'; 5001, 5002; 5003, 5004, 5005, 5006; 5007, 5008; 5009, 5010, 5011, 5012, 5013, 5014) are arranged in a contact zone between two linings (22B; 22C; 202, 202'; 2201, 2202; 2203, 2204; 2205, 2206, 2207; 2208, 2209, 2210) of adjacent sectors (200, 200') and are secured to at least one of said linings (22B; 22C; 202, 202'; 2201, 2202; 2203, 2204; 2205, 2206, 2207; 2208, 2209, 2210) of sectors (200, 200'; 2000; 2001; 2002; 2003).

3. Mould (10) for a tyre according to either one of Claims 1 and 2, wherein the microstructures (5; 6; 7; 8; 9; 10; 31, 50; 50A; 50C) are arranged in a contact zone between a lining (22; 22A; 22C) of a sector (20) and a shell (30) and are secured to the lining of the sector (20) and/or to the shell (30).

4. Mould (10; 100) for a tyre according to any one of Claims 1 to 3, **characterized in that** said microstructures (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) are produced by laser sintering.

5. Mould (10; 100) for a tyre according to Claim 4, wherein said microstructures (5; 6; 7; 8; 9; 10; 50; 50A; 50B; 50C; 500, 500'; 5001, 5002; 5003, 5004, 5005, 5006; 5007, 5008; 5009, 5010, 5011, 5012, 5013, 5014) are produced on a perimeter of the moulding lining (22; 22A; 22B; 22C; 202, 202'; 2201, 2202; 2203, 2204; 2205, 2206, 2207; 2208, 2209, 2210).

6. Mould (10; 100) for a tyre according to any one of Claims 1 to 3, wherein said microstructures (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) are attached and fastened to the mould by fastening means.

7. Mould (10; 100) for a tyre according to Claim 6, wherein said microstructures (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) are fastened by microwelding.

8. Mould (10; 100) for a tyre according to any one of Claims 1 to 7, wherein the microstructures (5; 6; 7; 8; 9; 10; 31, 50; 50A; 50B; 50C; 500, 500'; 5001, 5002; 5003, 5004, 5005, 5006; 5007, 5008; 5009, 5010, 5011, 5012, 5013, 5014) are designed to adapt to the profile of the clearance between two linings of adjacent sectors (200, 200'; 2000; 2001; 2002; 2003) and/or between a lining of a sector (20) and a shell (30) .

9. Mould (10; 100) for a tyre according to any one of Claims 1 to 8, wherein the microstructures (5, 6) are designed, on account of their shape, to be compressed under the effect of a stress.

10. Mould (10; 100) for a tyre according to Claim 8, wherein the shape of said microstructures is one of spikes, pyramids (5), squares (6) and domes.

11. Mould (10; 100) for a tyre according to any one of Claims 1 to 8, wherein the microstructures (7; 8; 9; 10) are designed, on account of their shape, to bend under the effect of a stress.

12. Mould (10; 100) for a tyre according to Claim 10, wherein the shape of said microstructures is one of curved strips (9), kinked strips (10) and inclined strips (7; 8).
